# EUROPÄISCHE PATENTSCHRIFT

(11) **EP 0 497 934 B1**
(45) Veröffentlichungstag und Bekanntmachung des Hinweises auf die Patenterteilung: **11.01.1995**
(21) Anmeldenummer: 91913770.3
(22) Anmeldetag: 03.08.1991
(51) Int. Cl.: B60T 8/42, B60T 8/40, B60T 8/44

(54) **BLOCKIERGESCHÜTZTE BREMSANLAGE FÜR KRAFTFAHRZEUGE**
ANTI-LOCK BRAKING SYSTEM FOR MOTOR VEHICLES
SYSTEME DE FREINAGE A DISPOSITIF ANTIBLOCAGE POUR VEHICULES A MOTEUR

(30) Priorität: 24.08.1990 DE 4026743
(43) Veröffentlichungstag der Anmeldung: 12.08.1992
(73) Patentinhaber: ITT Automotive Europe GmbH, 60488 Frankfurt (DE)
(72) Erfinder: REINARTZ, Hans-Dieter, D-6000 Frankfurt am Main 50 (DE); STEFFES, Helmut, D-6234 Hattersheim 3 (DE)
(86) Internationale Anmeldenummer: EP9101467
(87) Internationale Veröffentlichungsnummer: WO9203317

(56) Entgegenhaltungen:
- DE-A- 3 844 126
- FR-A- 2 635 305
- PATENT ABSTRACTS OF JAPAN, volume 10, No. 105 (M-471)(2162) 19 April 1986 & JP,A 60236859
- PATENT ABSTRACTS OF JAPAN, volume 10, No. 118 (M-475)(2175) 2 May 1986 & JP,A 60248467

## Beschreibung

Die Erfindung betrifft eine blockiergeschützte Bremsanlage für Kraftfahrzeuge nach dem Oberbegriff des Anspruchs 1.

Aus der nicht vorveröffentlichten Patent-Anmeldung mit dem amtlichen Aktenzeichen DE-A-40 15 884 ist bereits eine derartige Bremsanlage bekannt. Wird bei dieser Bremsanlage im Rahmen einer ABS-Regelung der Bremsdruck bzw. das Volumen in der blockiergefährdeten Radbremse über die Betätigung der Ein- und Auslaßventile abgebaut, so sorgt gleichzeitig die Steuerelektronik für den Anlauf der Hilfsdruckpumpe, um den Hilfsdrück bereitzustellen. Der Hilfsdruck schaltet ein Sperrventil in Sperrstellung, so daß der Bremsdruckgeber von dem in der Hauptdruckleitung anstehenden Pumpendruck abgetrennt ist. Infolge des über eine Druckfeder voreingestellten Druckbegrenzerventils sowie auf Grund der hydraulischen Verknüpfung des Druckbegrenzerventils mit der Radbremse an der Vorderachse und infolge der hydraulischen Verbindung zur Hilfsdruckpumpe reguliert sich der Pumpendruck in Abhängigkeit des am Druckbegrenzerventils wirksamen Radbremsdruckes sowie in Abhängigkeit des federkrafteingestellten hydraulischen Vordrucks selbstätig ein. Folglich wird durch das Druckbegrenzerventil der Pumpendruck auf den jeweiligen Radbremsdruck, zuzüglich dem einjustierten Vordruck der wirksamen Druckfeder eingestellt. Einerseits kann somit bei Bedarf der Druckaufbau der Hilfsdruckpumpe schneller erfolgen, da durch die erfindungsgemäße hydraulische Schaltstellung gegen einen relativ geringeren Druck anzuströmen ist, andererseits ist die Geräuschemission des Einlaßventils deutlich reduziert, da die Druckdifferenz am Einlaßventil nicht höher sein kann, als der von der Druckfeder erzeugte Vordruck des Druckbegrenzerventils.

Der Erfindung liegt somit die Aufgabe zu Grunde, eine blockiergeschützte Bremsanlage der eingangs genannten Gattung derart weiterzubilden, daß bei einem vom Vorratsbehälter entkoppeltem Bremssystem eine bremsschlupfabhängige Anpassung der Hilfsdruckversorgung an den tatsächlich erforderlichen Druckmittelbedarf in der Radbremse ermöglicht ist.

Die Aufgabe wird erfindungsgemäß durch die kennzeichnenden Merkmale des Patentanspruchs 1 gelöst, wonach in einem Druckmittelspeicher ein erster Druckspeicherkolben dem zwischen der Hilfsdruckpumpe und dem Druckbegrenzerventil anstehenden hydraulischen Druck ausgesetzt ist, wobei ein mit dem Druckspeicherkolben korrespondierender weiterer Druckspeicherkolben in einem Druckspeicherraum Druckmittel der Hilfsdruckleitung aufnimmt, so daß der erste Druckspeicherkolben bei geöffnetem Druckbegrenzerventil eine Druckentlastung in Richtung der Rücklaufleitung erfährt und der weitere Druckspeicherkolben eine das Speichervolumen im Druckspeicherraum vergrößernde Hubbewegung vollzieht. Die Erfindung basiert somit im wesentlichen auf dem Gedanken, über einen am Druckbegrenzerventil angeschlossenen Druckmittelspeicher eine bedarfsgerechte Regelung des Speicherdruckes bzw. des Volumens in einem geschlossenen Hydrauliksystem in Abhängigkeit des Radbremsdruckes vorzunehmen.

Die Erfindung hat gegenüber der gattungsbildenden Bremsanlage den Vorteil, daß die Rücklaufleitung nicht mehr an den offenen Vorratsbehälter angeschlossen ist, sondern mit dem Hauptzylinder in Verbindung steht, wodurch ein an der Hilfsdruckpumpe angeschlossenes Speichersystem in Abhängigkeit des tatsächlich erforderlichen Radbremsvolumens bzw. des Radbremsdrucks geregelt wird.

Die Ausgestaltung des Erfindungsgedankens gemäß Anspruch 2 sieht vor, den Druckmittelspeicher aus einer baulichen sowie wirkungsmäßigen Hintereinanderschaltung von zwei miteinander korrespondierenden Druckspeicherkolben zu bilden, wodurch über die Funktion des Druckbegrenzerventils eine mittelbare hydraulische Rückwirkung des an der Radbremse eingestellten Druckniveaus auf den Druckspeicher und dies zu einer gegenüber dem ersten Druckspeicherkolben phasenverschobenen Hubbewegung des zweiten Druckspeicherkolbens führt.

Die vorteilhafte Weiterbildung der Erfindung gemäß Anspruch 3 sieht vor, zwischen den beiden korrespondierenden Druckspeicherkolben ein Federelement einzuspannen, um eine federkennlinienabhängige Folgesteuerung des im Hochdruckspeicherteiles eingesetzten zweiten Druckspeicherkolbens zu bewirken.

Eine baulich kompakte und damit integrale Vereinigung der beiden Druckspeicherkolben mit dem Federelement in einem gemeinsamen Druckspeichergehäuse ist durch den Anspruch 4 dargelegt.

Aufgrund der funktionsrelevanten Zusammenhänge ist entsprechend der Merkmalskombination von Anspruch 5 und 6 zwischen der den ersten Druckspeicherkolben mit der die Hilfsdruckleitrng verknüpfenden hydraulischen Druckmittelverbindung ein in Richtung der Hilfsdruckpumpe sperrend wirkendes Rückschlagventil und eine Drossel angeordnet. Damit ist einerseits ein Rückströmen von Druckmittel zur Hochdruckseite verhindert, andererseits erfolgt über die Drossel eine gedämpfte Druckbeaufschlagung des ersten Druckspeicherkolbens.

Die Merkmalskombinationen der Ansprüche 7 bis 9 geben Aufschluß über die hydraulische Steuerung der beiden Druckspeicherkolben. Dementsprechend übernimmt der zweite Druckspeicherkolben infolge seiner direkten hydraulischen Verbindung zu Hilfsdruckleitung die Funktion des Hochdruckspeichers, während der erste, unmittelbar durch den hydraulischen Druck des Druckbegrenzerventils gesteuerte Druckspeicherkolben sowohl die Aufgabe des Niederdruckspeicherkolbens wie auch die Funktion eines Hochdruckvorsteuerkolbens erfüllt.

Weitere Merkmale, Vorteile und Anwendungsmöglichkeiten der vorliegenden Erfindung ergeben sich aus der nachfolgenden Beschreibung eines Ausführungsbeispieles anhand einer Zeichnung. Dabei bilden alle beschriebenen und/oder bildlich dargestellten Merkmale für sich sowie in sinnvoller Kombination den Gegenstand der Erfindung, auch unabhängig von ihrer Zusammenfassung in den Ansprüchen oder deren Rückbeziehung.

Es zeigt:
- Fig. 1: eine schematische, schaltungstechnische Darstellung und Verknüpfung des Druckmittelspeichers im geschlossenen Hydrauliksystem der Bremsanlage.
- Fig. 2: zeigt in der Ergänzung und in der detaillierten Darstellung gegenüber Fig. 1 eine bauliche Gestaltungsvariante des Sperrventiles.

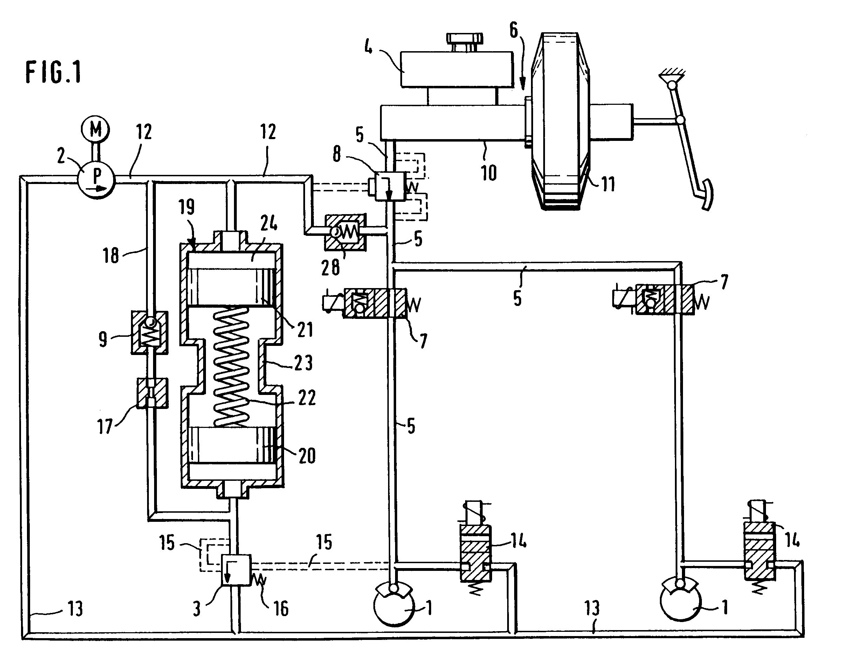

Es zeigt die Fig. 1 die prinzipielle hydraulische Schaltung der erfindungsgemäßen, blockiergeschützten Bremsanlage in Diagonalbremskreisaufteilung. Zum Zwecke der besseren Überschaubarkeit ist lediglich eine der beiden Bremskreisdiagonalen gezeigt und erläutert.

Diese abbildungsgemäße Bremsanlage besteht aus einem Bremsdruckgeber 6, der über verzweigte Hauptdruckleitungen 5 eine hydraulische Verbindung zu den diagonal aufgeteilten Radbremsen 1 herstellt. Der Bremsdruckgeber 6 weist einen Tandem-Hauptzylinder 10 und einen Vakuumverstärker 11 auf, wobei der Vorratsbehälter 4 auf konventionelle Weise unmittelbar an dem Tandem-Hauptzylinder 10 befestigt ist. In der Hauptdruckleitung 5 angeordnet, befindet sich ein dem Bremsdruckgeber 6 zugeordnetes Sperrventil 8 und das der Radbremse 1 zur Vorderachse zugehörige Einlaßventil 7. Das abbildungsgemäße Einlaßventil 7 ist elektromagnetisch ansteuerbar. Im Abzweig zwischen dem Sperrventil 8 und dem Einlaßventil 7 schließt sich die der zweiten diagonalen Radbremse 1 zugeordnete, ebenfalls mit einem Einlaßventil 7 versehene Hauptdruckleitung 5 an, sowie eine die Hilfsdruckpumpe 2 mit den Hauptdruckleitung 5 verbindende Hilfsdruckleitung 12. Eine die diagonale Radbremsen 1 mit dem Vorratsbehälter 4 verbindende Rücklaufleitung 13 nimmt jeweils zwischen den Radbremsen 1 und den Einlaßventilen 7 ein elektromagnetisch steuerbares Auslaßventil 14 auf, und steht ferner mit der Saugleitung der Hilfsdruckpumpe 2, wie auch mit einem hydraulischen Anschluß des Druckbegrenzerventils 3 in Verbindung. Das Druckbegrenzerventil 3 ist über die an der Hilfsdruckleitung 12 und der Hauptdruckleitung 5 abgezweigte Steuerdruckleitungen 15 einerseits mit der Hilfsdruckpumpe 2 und andererseits mit der Radbremse 1 der Vorderachse verbunden. Ferner ist durch die Anordnung einer Druckfeder 16 am Druckbegrenzerventil 3 eine Vorspannkraft zur Erzeugung des gewünschten hydraulischen Vordrucks wirksam. Im Abzweig an der Hilfsdruckleitung 12 und dem daran angeschlossenen hydraulisch steuerbaren Druckbegrenzerventil 3, befindet sich in einer parallel zur Rücklaufleitung 13 angeordneten Druckmittelverbindung 18 ein in Richtung der Hilfsdruckpumpe 2 sperrend wirkendes Rückschlagventil 9, das über eine in Reihe nachgeschaltete Drossel 17 mit dem Druckbegrenzerventil 3 in Verbindung steht. Ferner ist abgezweigt an der Hilfsdruckleitung 12 und an der Druckmittelverbindung 18 ein Druckmittelspeicher 19 angeordnet, der zwei hintereinander geschaltete, jeweils von der Hilfsdruckpumpe 2 gespeiste, sowie über eine zwischengeschaltete Feder 22 mittelbar korrespondierende Druckspeicherkolben 20,21 aufweist, wobei der erste Druckspeicherkolben 20 von dem eingestellten Druck des Druckbegrenzerventil 3 gesteuert wird, während der zweite Druckspeicherkolben 21 unter der Wirkung des Drucks der Hilfsdruckleitung 12 steht.

### Funktionsweise:

Die abbildungsgemäßen Ventilschaltstellungen sind allgemein gültig für die Bremslösestellung wie auch für den Zustand während der schlupffreien Normalbremsstellung.

Bei schlupffreier Betriebsbremsstellung wird in der Hauptdruckleitung 5 durch die Betätigung des Bremsdruckgebers 6 ein fußkraftproportionale Druck über das in der Grundstellung auf Durchlaß geschaltete Sperrventil und über die den Radbremsen 1 zugehörigen Einlaßventile 7 aufgebaut. Die den Radbremsen 1 zugeordneten Auslaßventile 4 und Rückschlagventile 9 verharren in ihrer Grundstellung geschlossen, während der Druck in der Hauptdruckleitung 5 und in der daran angeschlossenen hydraulischen Steuerdruckleitung 15 wirkungsidentisch zur Druckfeder 16 am Druckbegrenzerventil 3 ansteht. Infolge des in Richtung der stillstehenden Hilfsdruckpumpe sperrend wirkenden Rückschlagventils 18, verbleibt die das Druckbegrenzerventil 3 mit der Hilfsdruckleitung 12 verbindende Steuerdruckleitung 15 zunächst drucklos.

Sobald auf Grund niedriger Fahrbahnreibwerte Bremsschlupfsignale die Überbremsung eines Fahrzeugrades an eine in der Abbildung nicht näher dargestellte Schlupfregel-Elektronik übermitteln, wird im Rahmen der ABS-Regelung der Bremsdruck bzw. das Volumen in der gefährdeten Radbremse 1 abgebaut, in dem das Auslaßventil 14 über ein elektrisches Signal der Steuerelektronik geöffnet und das zugehörige Einlaßventil 7 geschlossen wird. Gleichzeitig sorgt die Steuerelektronik für den Anlauf der Hilfsdruckpumpe 2, um den Hilfsdruck bereitzustellen. Der Hilfsdruck schaltet das Sperrventil 8 in Sperrstellung, so daß der Bremsdruckgeber 6 von dem in der Hauptdruckleitung 5 anstehenden Pumpendruck getrennt ist. Infolge des über die Druckfeder 16 voreingestellten Druckbegrenzerventils 3, sowie auf Grund der hydraulischen Verknüpfung des Druckbegrenzerventils 3 mit der Radbremse 1 an der Vorderachse und der hydraulischen Verbindung des Druckbegrenzerventils 3 mit der Hilfsdruckpumpe 2, reguliert sich der Speicherdruck in Abhängigkeit des am Druckbegrenzerventils 3 eingestellten und damit auf den Druckmittelspeicher 19 mittelbar rückwirkenden Radbremsdruck selbstätig ein. Folglich ist durch den am Druckbegrenzerventil 3 angeschlossene Druckmittelspeicher 19 der Speicherdruck auf den jeweiligen vorherrschenden Radbremsdruck einregulierbar.

In dem gezeigten Ausführungsbeispiel wird das von der Radbremse 1 in die Rücklaufleitung 13 abgelassene Druckmittelvolumen von der Hilfsdruckpumpe 2 angesaugt und unter Druckzunahme dem an der Hilfsdruckleitung 12 angeschlossenen Druckmittelspeicherraum 24 zugeführt. Dabei bestimmt der am Druckbegrenzerventil 19 anstehende Radbremsdruck der Vorderachse die Größe des Druckmittelspeichervolumens.

Ist infolge von Niedrigreibwerten zwischen Fahrzeugrad und Fahrbahn das Druckniveau in der Radbremse 1 relativ niedrig, so schaltet der Druck der Hilfsdruckpumpe 2 das Druckbegrenzerventil 3 hydraulisch in die Offenstellung um, so daß über das Rückschlagventil 9 und die Drossel 17 von der Druckseite der Hilfsdruckpumpe 2 Druckmittel zur Rücklaufleitung 13 strömen kann. Damit erfährt gleichzeitig der in Nähe des Druckbegrenzerventils 3 befindliche erste, als Niederdruckspeicher wirkende Druckspeicherkolben 20 eine Druckentlastung, womit auch der direkt vom Pumpendruck beaufschlagte zweite, als Hochdruckspeicherkolben wirkende Druckspeicherkolben 21 infolge der geminderten Vorspannwirkung des zwischengeschalteten Federelementes 22 eine das Speichervolumen vergrößernde und somit speicherdruckentlastende Hubbewegung vollzieht.

Im Gegensatz hierzu hält bei einem relativ hohen Druckniveau in der Radbremse 1 und damit im Betrieb auf Hochreibwerte das Druckbegrenzerventil 3 die hydraulische Verbindung zwischen der Rücklaufleitung 13 und der Hilfsdruckleitung 12 geschlossen, so daß mittels des am ersten Druckspeicherkolben 20 anstehenden Pumpendrucks das auf den zweiten Druckspeicherkolben 21 einwirkende Federelement 22 vorgespannt wird, womit sich das Speicherdruckniveau erhöht.

Damit ist eine ökonomische und regelungstechnisch sinnvolle Anpassung des Druckmittelspeichers 19 an die jeweiligen Erfordernisse der Bremsdruckregelung gewährleistet. Über dies hinaus ist ein klein bauender, kompakter Druckmittelspeicher zu realisieren, der außerdem durch die bremsdruckadaptive Speicherdruckregelung etwaige Betriebsgeräusche der Bremsanlage vermindert.

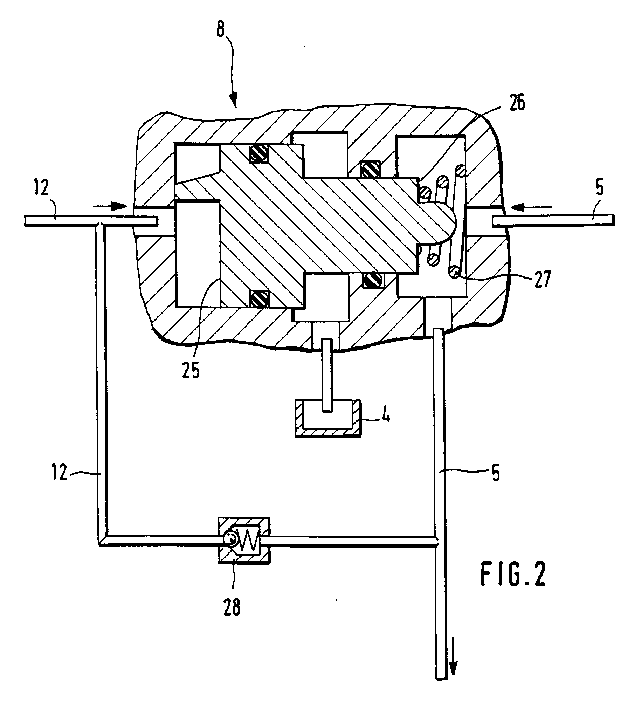

Fig.2 zeigt beispielhaft eine konstruktive Ausführungsform des Sperrventils 8 in der blockierschutzfreien oder inaktiven Bremsenstellung, wonach die Stirnfläche der größeren Kolbenstufe 25 vom Druck der Hilfsdruckpumpe 2 bzw. des Druckmittelspeichers 19 beaufschlagt wird, während an der entgegengesetzten kleineren Kolbenstufe 26 die hydraulische Verbindung zwischen dem Tandem-Hauptzylinder 10 und dem Radbremskreis geregelt wird. Gleichzeitig verhindert das parallel zur Hilfsdruckleitung 12 und der Hauptdruckleitung 5 angeordnete, in Richtung der Hilfsdruckleitung 12 sperrend wirkende Rückschlagventil 17 das Rückströmen von geregeltem Druckmittel des hauptzylinderseitig angeschlossenen Bremskreises in Richtung der Hilfsdruckleitung 12. Die kleinere Kolbenstufe 26 ist vorzugsweise als Sitzventil ausgebildet, auf dessen Ventilabsatz eine Druckfeder 27 gehalten ist. Die Druckfeder 27 stützt sich an der entgegengesetzten Gehäusewandung des Sperrventils 8 ab, wodurch der an der großen Kolbenstufe 25 angeformte Anschlag die Gehäusewandung berührt. Sobald im Rahmen der Blockierschutzregelung die Aktivierung des Hilfsdrucksystems erfolgt, wirkt der Hilfsdruck auf die große Kolbenstufe 25 und verschiebt den Stufenkolben in die Sperrstellung des Sitzventils. Der Tandem-Hauptzylinder 10 ist folglich rückwirkungsfrei von der angeschlossenen Hauptdruckleitung getrennt, während über das Rückschlagventil 18 Druckmittel von der Hilfsdruckleitung 12 zur Hauptdruckleitung 5 gelangen kann.

Damit sorgt das in der Hauptdruckleitung 5 angeordnete Sperrventil 8 in der Funktion eines Druckreglers während des ABS-Betriebs für die Einhaltung eines definierten Druckverhältnisses zwischen dem Tandem-Hauptzylinder 10 und der Hilfsdruckpumpe 2. Das Sperrventil 8 bleibt geschlossen, solange sich in den angegliederten Radbremskreisen kein Volumenmangel einstellt, wodurch sich während der Sperrphase des Sperrventils 8 im Tandem-Hauptzylinder 10 ein geringeres, rückwirkungsfreies Druckniveau einstellt als im Druckmittelspeicher 19.

### Bezugszeichenliste

- 1: Radbremse
- 2: Hilfsdruckpumpe
- 3: Druckbegrenzerventil
- 4: Vorratsbehälter
- 5: Hauptdruckleitung
- 6: Bremsdruckgeber
- 7: Einlaßventil
- 8: Sperrventil
- 9: Rückschlagventil
- 10: Tandem-Hauptzylinder
- 11: Vakuumverstärker
- 12: Hilfsdruckleitung
- 13: Rücklaufleitung
- 14: Auslaßventil
- 15: Steuerdruckleitung
- 16: Druckfeder
- 17: Rückschlagventil
- 18: Druckmittelverbindung
- 19: Druckmittelspeicher
- 20: erster Druckspeicherkolben
- 21: zweiter Druckspeicherkolben
- 22: Federelement
- 23: Druckspeichergehäuse
- 24: Druckspeicherraum
- 25: große Kolbenstufe
- 26: kleine Kolbenstufe
- 27: Druckfeder

## Patentansprüche

1. Blockiergeschützte Bremsanlage für Kraftfahrzeuge, mit einem pedalbetätigtem, vorzugsweise hilfskraftunterstützten Bremsdruckgeber (6), der einen Hauptzylinder (10) aufnimmt, an den zumindest über eine Hauptdruckleitung (5) eine Radbremse (1) angeschlossen ist, mit einer an eine Hilfsdruckleitung (12) angeschlossenen hydraulischen Hilfsdruckpumpe (2), sowie aus Radsensoren und elektronischen Schaltkreisen zur Ermittlung des Raddrehverhaltens und zur Erzeugung von elektrischen Bremsdrucksteuersignalen bestehend, die zur Schlupfregelung die in die Druckmittelleitungen eingefügten, elektromagnetisch betätigbaren Einlaßventile (7) und Auslaßventile (14) steuern, wobei ein Druckbegrenzerventil (3) vom Druck der Hilfsdruckpumpe (2) und von einem an der Radbremse (1) anstehenden Druck beaufschlagbar beim Überschreiten eines definierten Vordrucks am Druckbegrenzerventils (3) eine hydraulische Verbindung von der Hilfsdruckleitung (12) zur drucklosen Rücklaufleitung (13) herstellt, dadurch **gekennzeichnet**, daß in einem Druckmittelspeicher (19) ein erster Druckspeicherkolben (20) dem zwischen der Hilfsdruckpumpe (2) und dem Druckbegrenzerventil (3) anstehenden hydraulischen Druck ausgesetzt ist, und daß ein mit dem Druckspeicherkolben (20) korrespondierender weiterer Druckspeicherkolben (21) in einem Druckspeicherraum (24) Druckmittel der Hilfsdruckleitung (12) aufnimmt, wobei der erste Druckspeicherkolben (20) bei geöffnetem Druckbegrenzerventil (3) eine Druckentlastung in Richtung der Rücklaufleitung (13) erfahrt und der weitere Druckspeicherkolben (21) eine das Speichervolumen im Druckspeicherraum (24) vergrößernde Hubbewegung vollzieht.

2. Blockiergeschützte Bremsanlage nach Anspruch 1, dadurch **gekennzeichnet**, daß der Druckmittelspeicher (19) aus einer baulichen sowie wirkungsmäßigen Hintereinanderschaltung von zwei miteinander korrespondierenden Druckspeicherkolben (20,21) gebildet ist.

3. Blockiergeschützte Bremsenlage nach Anspruch 1 oder 2, dadurch **gekennzeichnet**, daß zwischen den korrespondierenden beiden Druckspeicherkolben (20,21) ein Federelement (22) eingespannt ist.

4. Blockiergeschützte Bremsanlage nach einem der vorhergehenden Ansprüche, dadurch **gekennzeichnet**, daß beide Druckspeicherkolben (20,21) gemeinsam mit der Feder (22) in einem Druckspeichergehäuse (23) integriert sind.

5. Blockiergeschützte Bremsanlage nach einem der vorhergehenden Ansprüche, dadurch **gekennzeichnet**, daß zwischen dem ersten Druckspeicherkolben (20) und der Hilfsdruckleitung (12) ein Rückschlagventil (9) und eine Drossel (17) aufweisende Druckmittelverbindung (18) angeordnet ist.

6. Blockiergeschützte Bremsanlage nach Anspruch 5, dadurch **gekennzeichnet**, daß das zwischen der Hilfsdruckleitung (12) und der Drossel (17) angeordnete Rückschlagventil (9) in Richtung der Hilfsdruckpumpe (2) sperrend wirkt.

7. Blockiergeschützte Bremsanlage nach einem der vorhergehenden Ansprüche, dadurch **gekennzeichnet**, daß der zweite Druckspeicherkolben (21) unmittelbar vom Druck der Hilfsdruckpumpe (2) beaufschlagbar ist.

8. Blockiergeschützte Bremsanlage nach mindestens einem der vorhergehenden Ansprüche, dadurch **gekennzeichnet**, daß der erste Druckspeicherkolben (20) mittelbar von dem zwischen dem Rückschlagventil (9) und dem Druckbegrenzerventil (3) befindlichen Druckmittelvolumen steuerbar ist.

9. Blockiergeschützte Bremsanlage nach Anspruch 8, dadurch **gekennzeichnet**, daß die Drossel (17) zwischen dem Rückschlagventil (9) und dem am Druckbegrenzerventil (3) unmittelbar angeschlossenen ersten Druckspeicherkolben (20) angeordnet ist.

## Claims

1. An anti-lock-controlled brake system for automotive vehicles with a pedal-operated, preferably, auxiliary-energy-assisted braking pressure generator (6) accommodating a master cylinder (10), to which a wheel brake (1) is connected at least through a main pressure line (5), an auxiliary hydraulic pressure pump (2) connected to an auxiliary pressure line (12), as well as wheel sensors and electronic circuits for detecting the rotational behaviour of the wheels and for generating electric braking pressure control signals which, for the purpose of controlling the slip, control the electromagnetically actuatable inlet valves (7) and outlet valves (8) inserted into the pressure medium lines, with a pressure limiting valve (3) - subjectible to the pressure of the auxiliary pressure pump (2) and a pressure acting on the wheel brake (1) - establishing a hydraulic connection from the auxiliary pressure line (12) to the pressureless return line (13) when a defined prepressure is exceeded at the pressure limiting valve (3),
**characterized** in that in a pressure medium accumulator (19) a first pressure accumulator piston (20) is exposed to the hydraulic pressure prevailing between the auxiliary pressure pump (2) and the pressure limiting valve (3), and in that a further pressure accumulator piston (21) communicating with the pressure accumulator piston (20) takes up pressure medium of the auxiliary pressure line (12) in a pressure accumulator chamber (24), the first pressure accumulator piston (20) being relieved from pressure in the direction of the return line (13) when the pressure limiting valve (3) is open, and the further pressure accumulator piston (21) performing a stroke movement which increases the accumulator volume in the pressure accumulator chamber (24).

2. An anti-lock-controlled brake system as claimed in claim 1,
**characterized** in that the pressure medium accumulator (19) is formed by connecting two pressure accumulator pistons (20, 21) in tandem both in terms of construction and effect, the two pistons communicating with each other.

3. An anti-lock-controlled brake system as claimed in claim 1 or in claim 2,
**characterized** in that a spring element (22) is clamped between the two communicating pressure accumulator pistons (20, 21).

4. An anti-lock-controlled brake system as claimed in any one of the preceding claims,
**characterized** in that both pressure accumulator pistons (20, 21), together with the spring (22), are integrated in a pressure accumulator housing (23).

5. An anti-lock-controlled brake system as claimed in any one of the preceding claims,
**characterized** in that a pressure medium connection line (18) having a non-return valve (9) and a throttle (17) is arranged between the first pressure accumulator piston (20) and the auxiliary pressure line (12).

6. An anti-lock-controlled brake system as claimed in claim 5,
**characterized** in that the non-return valve (9) arranged between the auxiliary pressure line (12) and the throttle (17) acts so as to be locking in the direction of the auxiliary pressure pump (2).

7. An anti-lock-controlled brake system as claimed in any one of the preceding claims,
**characterized** in that the pressure of the auxiliary pressure pump (2) is directly applicable to the second pressure accumulator piston (21).

8. An anti-lock-controlled brake system as claimed at least in one of the preceding claims,
**characterized** in that the first pressure accumulator piston (20) is indirectly controllable by the pressure medium volume prevailing between the non-return valve (9) and the pressure limiting valve (3).

9. An anti-lock-controlled brake system as claimed in claim 8,
**characterized** in that the throttle (17) is arranged between the non-return valve (9) and the first pressure accumulator piston (20) directly connected to the pressure limiting valve (3).

## Revendications

1. Système de freinage antiblocage, pour véhicule automobile, comprenant un générateur de pression de freinage (6), qui est actionné au moyen d'une pédale, avec de préférence une assistance de force, et qui comporte un maître-cylindre (10) auquel au moins un frein de roue (1) est raccordé par l'intermédiaire d'une conduite de pression principale (5), et une pompe hydraulique de pression auxiliaire (2) raccordée à une conduite de pression auxiliaire (12), ainsi que des capteurs de roue et des circuits électroniques de commutation, permettant de déterminer le comportement des roues en rotation et de produire des signaux électriques de commande de pression de freinage, qui commandent, en vue de la régulation du glissement, les valves d'entrée (7) et valves de sortie (14) à actionnement électromagnétique qui sont insérées dans les conduites d'agent de pression, tandis qu'une valve de limitation de pression (3), agencée de façon à pouvoir être soumise à la pression de la pompe de pression auxiliaire (2) et à une pression régnant sur le frein de roue (1), produit une liaison hydraulique de la conduite de pression auxiliaire (12) avec la conduite de retour sans pression (13) lorsqu'une pression définie préréglée sur la valve de limitation de pression (3) est franchie vers le haut, caractérisé en ce que, dans un accumulateur d'agent de pression (19), un premier piston d'accumulateur de pression (20) est soumis à la pression hydraulique régnant entre la pompe de pression auxiliaire (2) et la valve de limitation de pression (3) et en ce qu'un second piston d'accumulateur de pression (21), associé au premier piston d'accumulateur de pression (20), reçoit, dans une chambre d'accumulateur de pression (24), de l'agent de pression de la conduite de pression auxiliaire (12), tandis que le premier piston d'accumulateur de pression (20) est soumis, lorsque la valve de limitation de pression (3) est ouverte, à une détente en direction de la conduite de retour (13) et que le second piston d'accumulateur de pression (21) exécute une course qui accroît le volume d'accumulation dans la chambre d'accumulateur de pression (24).

2. Système de freinage antiblocage selon la revendication 1, caractérisé en ce que l'accumulateur d'agent de pression (19) est réalisé au moyen du montage l'un derrière l'autre, sur le plan structurel et sur le plan du fonctionnement, de deux pistons d'accumulateur de pression (20, 21) associés l'un à l'autre.

3. Système de freinage antiblocage selon l'une des revendications 1 et 2, caractérisé en ce qu'un élément à fonction de ressort (22) est enserré entre les deux pistons d'accumulateur de pression (20, 21) associés.

4. Système de freinage antiblocage selon l'une des revendications précédentes, caractérisé en ce que les deux pistons d'accumulateur de pression (20, 21) constituent un bloc unitaire, en commun avec le ressort (22), dans un boîtier d'amplificateur de pression (23).

5. Système de freinage antiblocage selon l'une des revendications précédentes, caractérisé en ce qu'entre le premier piston d'accumulateur de pression (20) et la conduite de pression auxiliaire (12), il est disposé une liaison d'agent de pression (18) comportant une valve antiretour (9) et un étranglement (17).

6. Système de freinage antiblocage selon la revendication 5, caractérisé en ce que la valve antiretour (9) disposée entre la conduite de pression auxiliaire (12) et l'étranglement (17) a une action de blocage en direction de la pompe de pression auxiliaire (2).

7. Système de freinage antiblocage selon l'une des revendications précédentes, caractérisé en ce que le second piston d'accumulateur de pression (21) est agencé de façon à pouvoir être soumis directement à la pression de la pompe de pression auxiliaire (2).

8. Système de freinage antiblocage selon au moins l'une des revendications précédentes, caractérisé en ce que le premier piston d'accumulateur de pression (20) est agencé de façon à pouvoir être commandé indirectement par le volume d'agent de pression qui est situé entre la valve antiretour (9) et la valve de limitation de pression (3).

9. Système de freinage antiblocage selon la revendication 8, caractérisé en ce que l'étranglement (17) est disposé entre la valve antiretour (9) et le premier piston d'accumulateur de pression (20) qui est raccordé directement à la valve de limitation de pression (3).
